# EUROPÄISCHE PATENTSCHRIFT

(11) **EP 2 744 768 B1**
(45) Veröffentlichungstag und Bekanntmachung des Hinweises auf die Patenterteilung: **06.04.2016**
(21) Anmeldenummer: 12735790.3
(22) Anmeldetag: 16.07.2012
(51) Int. Cl.: C04B 7/32, C04B 7/345, C04B 28/06

(54) **VERFAHREN ZUR HERSTELLUNG VON TERNESIT-KLINKER**
PROCESS FOR THE PRODUCTION OF TERNESITE CLINKER
PROCÉDÉ POUR LA PRODUCTION DU CLINKER DE TERNESITE

(30) Priorität: 18.08.2011 EP 11006757; 26.10.2011 EP 11008570; 05.03.2012 EP 12001488; 26.03.2012 EP 12002111; 30.03.2012 EP 12002342; 10.05.2012 EP 12003718
(43) Veröffentlichungstag der Anmeldung: 25.06.2014
(73) Patentinhaber: HeidelbergCement AG, 69120 Heidelberg (DE)
(72) Erfinder: BULLERJAHN, Frank, 69181 Leimen (DE); SCHMITT, Dirk, 69181 Leimen (DE); BEN HAHA, Mohsen, 69117 Heidelberg (DE)
(74) Vertreter: Wagner, Jutta
(86) Internationale Anmeldenummer: PCT/EP2012/002976
(87) Internationale Veröffentlichungsnummer: WO 2013/023729

(56) Entgegenhaltungen:
- EP-A1- 1 171 398
- FR-A1- 2 901 270
- SHERMAN N ET AL: "Long-term behaviour of hydraulic binders based on calcium sulfoaluminate and calcium sulfosilicate", CEMENT AND CONCRETE RESEARCH, PERGAMON PRESS, ELMSFORD, NY, US, Bd. 25, Nr. 1, 1. Januar 1995 (1995-01-01) , Seiten 113-126, XP002665884, ISSN: 0008-8846
- BERETKA J ET AL: "Influence of C4A3S~ content and W/S ratio on the performance of calcium sulfoaluminate-based cements", CEMENT AND CONCRETE RESEARCH, PERGAMON PRESS, ELMSFORD, NY, US, Bd. 26, Nr. 11, 1. November 1996 (1996-11-01), Seiten 1673-1681, XP002320780, ISSN: 0008-8846, DOI: 10.1016/S0008-8846(96)00164-0
- MARROCCOLI M ET AL: "Synthesis of Caclium Sulfoaluminate Cements From Al2O3-Rich By-products From Aluminium Manufacture", 2ND INTERNATIONAL CONFERENCE ON SUSTAINABLE CONSTRUCTION MATERIALS AND TECHNOLOGIES 28TH-30TH JUNE 2010; UNIVERSITÀ POLITECNICA DELLE MARCHE, ANCONA, ITALY, , Nr. 2TH 28. Juni 2010 (2010-06-28), Seiten 1-9, XP002645670, Gefunden im Internet: URL:http://www.claisse.info/2010%20papers/ l61.pdf [gefunden am 2011-06-28] in der Anmeldung erwähnt
- KURDOWSKI W ET AL: "Mineral Composition of Build-up in Cement Kiln Preheater", JOURNAL OF THERMAL ANALYSIS AND CALORIMETRY, KLUWER ACADEMIC PUBLISHERS, DORDRECHT, NL, Bd. 55, Nr. 3, 1. März 1999 (1999-03-01), Seiten 1021-1029, XP019252787, ISSN: 1572-8943
- E. IRRAN ET AL: "Ternesit, Ca5(SiO4)2SO4, ein neues Mineral vom Ettringer Bellerberg, Eifel, Deutschland", MINERALOGY AND PETROLOGY, Bd. 60, Nr. 1-2, 1. Januar 1997 (1997-01-01), Seiten 121-132, XP055030231, ISSN: 0930-0708, DOI: 10.1007/BF01163138

## Beschreibung

Die vorliegende Erfindung betrifft die Herstellung von Ternesit, welches sich als Additiv z.B. für Calciumsulfoaluminat(ferrit)(Belit)-Klinker (CSA(F)(B)), -zement, und Bindemittel eignet.

Die Herstellung von Zement hat einen erheblichen Anteil an der globalen CO₂-Produktion. Die weltweit wachsende Nachfrage nach Zement vor allem in Entwicklungsländern sowie steigende Kosten für Rohstoffe, Energie und CO₂-Zertifikate führten in den letzten Jahren zur zunehmenden Verringerung des Klinkerfaktors, zum Beispiel durch eine Zugabe von Kalksteinmehlen, Flugaschen und granulierten Hüttensanden als Klinkerersatzstoffe. Diese Verwendung von Nebenprodukten und Abfallprodukten anderer Industrien sowie die Entwicklung alternativer Bindemittel rücken zunehmend in den Fokus des politischen, wissenschaftlichen und wirtschaftlichen Interesses.

Weltweit fallen im Zuge der thermischen Abfallbeseitigung / Energiegewinnung, Stahlerzeugung, Edelmetallgewinnung etc., enorme Mengen an Materialien an, die im Folgenden als industrielle Nebenprodukte bezeichnet werden. Je nach Qualität / Zusammensetzung / Anwendungsgebiet können diese teilweise oder vollständig in verschiedenen Prozessen und Produkten wiederverwendet werden, z.B. als Korrektiv zur Klinkerherstellung von Portlandzement (OPC), als Additiv für Beton und als Zuschlag für Asphalt und Beton, etc.

Aufgrund verschiedener Faktoren, wie zum Beispiel der fehlenden Gleichmäßigkeit (Chemismus und Mineralogie) und der Schadstoffgehalte (Organik, Schwermetalle, etc.), ist die Verwendung der industriellen Nebenprodukte aber nicht unproblematisch. Unter anderem kann eine sinkende Reaktivität / Qualität von OPC-Klinker bzw. eine mangelnde Raumbeständigkeit von Zementen dazu führen, dass jährlich große Mengen solcher Materialien kostenintensiv deponiert bzw. als Haldenmaterial und Deponiematerial herangezogen werden müssen.

Schwierigkeiten können auch bei der Deponierung solcher Materialien auftreten, z.B. können Auslaugungsprozesse zur Kontamination der umliegenden Flächen und Gewässer / Grundwässer führen. Die Verwendung / Aufbereitung industrieller Nebenprodukte stellt daher eine große Herausforderung und eine noch immer nicht gelöste Aufgabe dar. Eine möglichst effiziente und nachhaltige Ressourcennutzung wird zukünftig unverzichtbar sein und besitzt eine globale Relevanz.

Neben der Substitution von Klinker im Zement und von Rohstoffen in der Rohmehlmischung wurde auch versucht, andere hydraulisch härtende Bindemittel zu finden. Hierzu zählen Calciumsulfoaluminatzemente und Zemente mit Belit als Hauptkomponente.

Es werden folgende in der Zementindustrie üblichen Abkürzungen verwendet: H-H₂O, C-CaO, A-Al₂O₃, F-Fe₂O₃, M-MgO, S-SiO₂ und $ -SO₃. Um die weitere Beschreibung zu vereinfachen werden zumeist Verbindungen in ihrer reinen Form angegeben, ohne explizite Angabe von Mischreihen / Substitution durch Fremdionen usw. wie sie in technischen und industriellen Materialien üblich sind. Wie jeder Fachmann versteht, kann die Zusammensetzung der in dieser Erfindung namentlich genannten Phasen, in Abhängigkeit vom Chemismus des Rohmehls und der Art der Herstellung, durch die Substitution mit diversen Fremdionen variieren, wobei solche Verbindungen ebenfalls in den Schutzbereich der vorliegenden Erfindung fallen und von der Angabe der reinen PhasenNerbindungen umfasst sein sollen.

EP 1 171 398 B1 (DE 600 29 779 T2) beschreibt die Sinterung spezifischer Rohmaterialien bei 900 bis 1200 °C, um im Ofen Spezialklinker zu produzieren, die hohe Konzentrationen an Kristall X = {(C, K, N, M)₄(A, F, Mn, P, T, S)₃(Cl, $)} und Kristall Y = {(C₂S)₃(CS)₃Ca(f, cl)₂} und/oder Kristall Z = {C₅S₂$} aufweisen. Diese Klinker werden mit hydraulischem Zement oder Zement vom Typ Portland gemischt, um fertige Zementzusammensetzungen zu produzieren.

Es wurde nun überraschend gefunden, dass die Phase C₅S₂$ (Ternesit auch als Sulfospurrit oder Sulfatspurrit bezeichnet) eine signifikant reaktive Phase in Systemen mit Aluminiumkomponenten darstellt. In der Literatur (siehe z.B. "Synthesis of Calcium Sulfoaluminate Cements From Al2O3-Rich By-products from Aluminium Manufacture", Milena Marroccoli et al., The second international conference on sustainable construction materials and technologies 2010, "Synthesis of Special Cements from Mixtures Containing Fluidized Bed Combustion Waste, Calcium Carbonate and Various Sources of Alumina", Belz et al, 28th Meeting of the Italian Section of The Combustion Institute 2005, "Fluidized Bed Combustion Waste as a Raw Mix Component for the Manufacture of Calcium Sulphoaluminate Cements", Belz G et al, 29th Meeting of the Italian Section of The Combustion Institute, 2006 und "The Fabrication of Value Added Cement Products from Circulating Fluidized Bed Combustion Ash", Jewet) R.B et al, World of Coal Ash (WOCA) Covington, Kentucky, USA, 2007) wird die Phase C₅S₂$ als wenig reaktiv bzw. inert und unerwünscht beschrieben. Des Weiteren werden regelmäßig Methoden aufgezeigt diese "unerwünschte Phase" zu vermeiden. Überraschenderweise hat sich bei unseren Versuchen gezeigt, dass eine signifikante Menge dieser Phase C₅S₂$ schon innerhalb der ersten Tage der Hydratation reagiert und die Phasenzusammensetzung der hydratisierten Proben signifikant beeinflusst.

Ternesit eignet sich insbesondere als Additiv zu hydraulischen Bindemitteln, wobei das zur Erhärtung notwendige Aluminium entweder aus dem Bindemittel oder teilweise oder ganz aus einer zugesetzten Aluminiumkomponente stammen kann. Ternesit kann auch die Umsetzung von latent-hydraulischen und/oder puzzolanischen Materialien anregen.

Unter Aluminiumkomponenten werden Stoffe mit einer hohen Löslichkeit und/oder hohen Reaktivität, wie zum Beispiel lösliche Alkali-/Erdatkalialuminate und Aluminiumsalze (z.B. Na₂Al₂O₄, K₂Al₂O₄, Aluminiumnitrat, -acetat, -chlorid, -formiat, -sulfat, etc.), reaktives und/oder amorphes Aluminiumhydroxid, Aluminiumoxidhydroxide, künstliche und natürliche Puzzolane (z.B. Metakaolin), Portlandzement mit hohen C₃A und/oder hohen C₄AF Gehalten, Tonerdezement, Kalziumsulfoaluminatzement usw. oder Kombination davon, verstanden. Die Alumniumkomponente zeigt jedoch für sich allein nicht zwingend ein hydraulisches oder latent-hydraulisches oder puzzolanisches Verhalten.

Die Herstellung von Bindemitteln aus Ternesit und latent hydraulischen und/oder puzzolanischen Materialien eröffnet völlig neue Märkte, Anwendungsmöglichkeiten und ermöglicht eine signifikante Reduzierung der CO₂ Produktion.

Es besteht daher Bedarf an effizienten, kostengünstigen und umweltschonenden Verfahren zur Herstellung von Ternesit und somit die Aufgabe, solche Verfahren zu finden.

Diese Aufgabe wird durch ein Verfahren zur Herstellung von Ternesit-Klinker gelöst, bei dem Ternesit-Klinker durch Sintern einer Rohmehlmischung, die mindestens Quellen für CaO, SiO₂ und SO₃ enthält, erhalten,wird, wobei die Sintertemperatur so eingestellt wird, dass der Ternesit-Klinker bezogen auf das Gesamtgewicht des Klinkers mindestens 20 Gew.-% C_{S}S₂$ enthält. Der Ternesit-Klinker kann gemahlen als eigenständiges Bindemittel verwendet werden. Bevorzugt wird Ternesit-Klinker in Kombination mit anderen hydraulischen und/oder latent hydraulischen und/oder puzzolanischen Materialien, wie z.B. Portlandzement, Flugasche, Hüttensand, getemperte Tone, künstliche Gläser, usw. verwendet. Der Ternesit-Klinker kann dementsprechend, vor oder nach dem Mahlen, mit anderen Stoffen zu einem Bindemittel vermischt werden.

Im Rahmen der vorliegenden Erfindung meint Klinker ein Sinterprodukt, welches durch Brennen einer Rohstoffmischung bei erhöhter Temperatur erhalten wird und zumindest eine hydraulisch reaktive Phase enthält. Mit Zement wird ein mit oder ohne Zusatz weiterer Komponenten gemahlener Klinker bezeichnet. Bindemittel oder Bindemittetmischung bezeichnet ein Zement und typischerweise aber nicht zwingend weitere, fein gemahlene Komponenten enthaltendes, hydraulisch erhärtendes Gemisch, welches nach Zusatz von Wasser, ggfs. Zusatzmitteln und Gesteinskörnung, zur Anwendung gelangt.

Ein Klinker kann bereits alle notwendigen bzw. gewünschten Phasen enthalten und nach Vermahlen zu Zement direkt als Bindemittel zum Einsatz kommen. Erfindungsgemäß wird die Zusammensetzung des Bindemittels bevorzugt durch Vermischen von zwei oder mehreren Klinkern und/oder Zementen erhalten, wobei das Vermischen bereits vor (oder während) dem Mahlen und/oder im gemahlenen Zustand und/oder bei der Herstellung des Bindemittels erfolgt. Soweit nicht ausdrücklich ein Zeitpunkt des Vermischens genannt ist, beziehen sich die folgenden Beschreibungen auf Bindemittel (und Zemente), die in dieser Beziehung nicht beschränkt sind.

Soweit nichts anderes angegeben ist mit "reaktiv" eine hydraulische Reaktivität gemeint.

Phasen, wie zum Beispiel C_{S}S₂$, werden vorrangig stöchiometrisch angegeben, jedoch kann die genaue Zusammensetzung abweichen/varüeren. Des Weiteren können verschiedene Fremdionen aus der Gruppe der Halogene, Nichtmetalle, Alkali- und Erdalkalimetalle, sowie Vertreter der Übergangs- und Halbmetalle und Metalle in die Kristallstruktur der Phase eingebaut werden. Für den erfindungsgemäßen Klinker sind diese alle geeignet. Vorzugsweise wird zum Beispiel Phosphat, Fluorid, Bor, Nitrat oder Chlorid aber auch Natrium und Kalium in die Struktur von C₅S₂$ eingebaut, wodurch diese stabilisiert wird (z.B. bei höheren Temperaturen > 1200 °C) und/oder schneller gebildet wird. Vorzugsweise kann Phosphat und / oder Eisen in die Phase C₄A₃$ eingebaut werden. Der Fremdioneneinbau kann zu einer erhöhten Bildungsgeschwindigkeit der Phase in der heißen Zone führen, was wiederum potentiell die benötigte Verweildauer verringert und / oder zu ihrer quantitativen Zunahme führen kann. Solche Stoffe, welche als Flussmittel wirken und/oder die Temperatur senken, die zur Bildung einer Schmelze notwendig ist, und/oder solche, die die Bildung der Klinkerverbindung fördern, wie zum Beispiel durch Mischkristallbildung und/oder Phasenstabilisierung, werden im Folgenden zusammengefasst als Mineralisatoren bezeichnet.

Die Bezeichnung Al₂O₃(Fe₂O₃) bedeutet ebenso wie in der Angabe C₄(AₓF₁₋ₓ)₃$ für die Klinkerphase, dass Aluminium teilweise durch Eisen ersetzbar ist, d.h. x ist eine Zahl von 0,1 bis 1,0. Typischerweise liegt hauptsächlich Aluminium mit geringen Beimengungen von Eisen vor, es liegt aber im Rahmen der Erfindung erhebliche Mengen Eisen bis hin zu einem überwiegenden Gehalt an Eisen einzusetzen.

Ein Nachweis für den Einbau von Eisen in die Phase C₄A₃$ ist die quantitative Abnahme eisenreicher Phasen (z.B. Fe₃O₄, C₂F und C₄AF), die Zunahme der Phase C₄A₃$ bzw. C₄(AₓFe₍₁₋ₓ₎)₃$, sowie die Zunahme der Peakintensitäten und des Gitterparameters c (A) [Kristallsystem: Orthorhombisch] von 9,1610 [PDF-Nummer: 01-085-2210, Tetracalcium hexaaluminate sulfate(VI) - Ca₄ (Al₆O₁₂)(SO₄), ICSD Collection Kode: 080361, Calculated from ICSD using POWD-12++, (1997), Struktur: Calos, N.J., Kennard, C.H.L., Whittaker, A.K., Davis, R.L., J. Solid State Chem., 119, 1, (1995)] über 9,1784 [PDF-Nummer: 00-051-0162, Calcium Aluminum Iron Oxide Sulfate - Ca₄((Al_{0.95}Fe_{0.05}))₆O₁₂(SO₄), ICSD Collection Kode: -, Primärer Verweis: Schmidt, R., Pöllmann, H., Martin-Luther-Univ., Halle, Germany., ICDD Grant-in-Aid, (1999)] bis zu Werten von über 9,2000. Die Prüfung auf eine etwaige Mischkristallbildung kann ebenfalls mittels der Bestimmung der Besetzungsfaktoren bei einer Rietveld-Anpassungen durch Unter- oder Gemischtbesetzungen einzelner Atomlagen ermittelt werden. Ein weiterer rein qualitativer Indikator ist die zum Teil deutliche Farbveränderung der Klinker. So ändert sich die Farbe der Klinker von einem Kastanien- / Ockerbraun über Grünbraun bis hin zu einem hellen Grauton.

Die gezielte Herstellung von Ternesit oder einem Klinker bzw. Zement mit Ternesit, als mindestens einer der Hauptkomponenten hat den Vorteil, dass Ternesit bzw. dieser Klinker in einem Schritt in einem Temperaturbereich von typischerweise 900 bis 1200°C, vorzugsweise 1050 bis 1150°C hergestellt werden kann. Bei diesen im Vergleich zu denen bei einer Herstellung von Ye'elimit als Hauptphase enthaltenden Klinkern niedrigen Brenntemperaturen ergibt sich des weiteren der Vorteil, dass in dem Klinker gezielt erhöhte Magnesium / Periklas-Gehalte (> 2 Gew.-%) eingestellt werden können. Aufgrund der geringen Brenntemperatur kann Periklas in einer reaktiven Form vorliegen und zur Festigkeitsentwicklung / Hydratation beitragen. Aber auch höhere Brenntemperaturen sind je nach Rohstoffmischung brauchbar, sofern Ternesit in hohen Anteilen gebildet wird, bevorzugt sind 20 bis 100 % des Klinkers.

C₅S₂$ kann durch Sinterung von Rohstoffen, welche ausreichende Mengen CaO, SiO₂ und SO₃ bereitstellen, hergestellt werden. Dabei eignen sich einerseits reine bzw. im Wesentlichen reine Rohstoffe wie Calciumcarbonat oder -oxid, Quarzmehl oder Microsilica, und Calciumsulfat. Andererseits kann eine Vielzahl natürliche aber auch industrielle Materialien, wie zum Beispiel, aber nicht ausschließlich, Kalkstein, Bauxit, Ton / Tonstein, kalzinierte Tone (z.B. Metakaolin), Basalte, Periodite, Dunite, Ignimbrite, Karbonatite, Aschen / Schlacken / Hüttensande hoher und geringer Qualität (Mineralogie / Glasgehalt, Reaktivität, etc.), diverse Haldenmaterialien, Rot- und Braunschlämme, natürliche Sulfatträger, Entschwefelungsschlämme, Phosphogips, Rauchgasgips, Titanogips, Fluorogips, etc., in geeigneter Kombination als Rohmaterial verwendet werden. Es fallen ebenfalls namentlich nicht genannte Stoffe / Stoffgruppen in den Schutzbereich, welche die chemischen Mindestanforderungen als potentielle Rohstoffe erfüllen. Die Rohstoffe können, müssen aber nicht, vorbehandelt werden.

Ternesit kommt auch als Mineral vor, jedoch sind keine Lagerstätten bekannt, aus denen es in ausreichender Menge bzw. Reinheit gewonnen werden kann, so dass der Einsatz von "natürlichem" Ternesit zwar möglich, in der Praxis aber unwirtschaftlich ist. Eine erfindungsgemäße Herstellung durch Sinterung geeigneter Rohstoffe ist vorzuziehen.

Die Rohstoffe für die Herstellung des erfindungsgemäßen Ternesit-Klinkers werden in an sich bekannter Weise auf übliche Feinheiten gemahlen. Feinheiten von 2000 bis 10000 cm²/g, vorzugsweise im Bereich von 3000 bis 6000 cm²/g und besonders bevorzugt von 4000 bis 5000 cm²/g sind besonders gut geeignet. Die Mahlfeinheit richtet sich in erster Linie nach der Art und Zusammensetzung des eingesetzten Rohstoffes, dem Brennprozess (Temperatur, Verweildauer in der Sinterzone, etc.) sowie den angestrebten Eigenschaften des Bindemittels und den zur Verfügung stehenden technischen Möglichkeiten.

Soll die Herstellung möglichst reines C₅S₂$ ergeben, werden Rohstoffe gewählt, welche neben Quellen für CaO, SiO₂ und SO₃ keine oder nur wenig weitere Bestandteile enthalten. Die Umsetzung von Calciumcarbonat mit Quarzmehl und Calciumsulfat im Temperaturbereich von 900 bis 1200 °C, vorzugsweise 1050 bis 1150 °C ergibt C₅S₂$ mit einer Reinheit von > 99 %.

Es ist jedoch bevorzugt, dass zur Herstellung von C₅S₂$ ein möglichst hoher Anteil kostengünstiger und umweltverträglicher Rohstoffe zum Einsatz kommt. Umweltverträglich meint hierbei einen möglichst geringen Energieeinsatz und/oder die Schonung natürlicher Rohstoffe bzw. hochwertiger Abfall- und Nebenprodukte.

Eine Umsetzung von etwa 25% der Flugasche FA1 (siehe Beispiele) mit etwa 45% Kalkstein K1, etwa 8% Quarz (Merck, p.a.) und etwa 20 % MicroA (natürlicher Anhydrit) ergab einen Klinker mit einem C₅S₂$ Gehalt von > 70 % und bei Umsetzung von ∼8% Metakaolin, ∼58% K1, ∼23% Micro A und ∼10% SiO₂ wurden Reinheiten von > 80 % erreicht.

Die Umsetzung dieser Rohstoffe erfolgt bevorzugt ebenfalls im Temperaturbereich von 900 bis 1200 °C, vorzugsweise 1050 bis 1150 °C. Hierbei wird, im Gegensatz zur bekannten Sinterung derselben Rohstoffe mit dem Ziel der Bildung von C₄A₃$ bei mindestens 1200 °C, im wesentlichen Ternesit gebildet.

Eine mögliche Rohstoffquelle stellen Ausgangsmaterialien dar, welche im Vorfeld eine Behandlung im Autoklaven durchlaufen haben und/oder Ausgangsmaterialien mit (sehr) geringen Partikel- und Kristallitgrößen. Sehr geringe Partikel- und Kristallitgrößen sind solche von 0,01 bis 0,1 µm und geringe Partikelgrößen solche von 0,1 bis 2 µm. Ausgangsmaterialien mit (sehr) geringen Partikel- und Kristallitgrößen und/oder Rohmischungen dieser können zum Beispiel, aber nicht ausschließlich, durch ein Sprüh-, ein Sol-Gel-, ein Glycerin-Nitrat- und/oder ein Polymer-Precurser-Verfahren hergestellt werden. Diese Verfahrensweise hat den Vorteil, dass das Rohmehl schon bei niedrigen Temperaturen (z.b. 900 bis 1000 °C) sehr schnell zum gewünschten Klinker umgesetzt wird, sowie dass je nach eingestellter Aufheizrate und aufgrund geringer Partikel- und Kristallitgrößen hydraulisch hoch reaktive Klinkerphasen erzeugt werden.

Je nach Rohstoffzusammensetzung können, insbesondere durch die Gegenwart von Mineralisatoren, auch höhere Temperaturen von z.B. bis 1300 °C geeignet sein, beispielsweise, wenn relevante Mengen Phosphor enthalten sind, wie es bei einer Verwendung von Phosphorgips der Fall ist. Im Unterschied zu den bekannten Verfahren/Klinkern steht erfindungsgemäß jedoch die Bildung von Ternesit im Fokus, die Sintertemperatur wird daher für dessen Bildung optimiert. Bei diesen Temperaturen können, neben Ternesit, auch vermehrt reaktive Polymorphe des Dicalciumsilikates auftreten. Im Stand der Technik wurde dagegen die Sintertemperatur für die Bildung von C₄A₃$ optimiert, Ternesit sollte möglichst nicht gebildet werden.

Demgegenüber wird erfindungsgemäß die Temperatur so gewählt, dass möglichst viel Ternesit gebildet wird und, sofern die Rohstoffe Quellen für Al₂O₃ bzw. Fe₂O₃ enthalten, der Gehalt an C₄(AₓF₍₁₋ₓ₎)₃$ auf weniger als 20 %, vorzugsweise auf weniger als 15 % begrenzt wird. Zwar könnten auch Klinker mit mehr C₄(AₓF₍₁₋ₓ₎)₃$ verwendet werden, aber ein höherer Gehalt davon geht zu Lasten von Ternesit und die entsprechend höhere Sintertemperatur kann auch die Reaktivität von Ternesit beeinträchtigen.

Der Temperaturbereich von 900°C bis 1300°C, vorzugsweise von 1050°C bis 1150°C, sollte für einen Zeitraum von 10 min bis 180 min, vorzugsweise von 25 min bis 120 min und noch stärker bevorzugt von 30 min bis 60 min durchlaufen werden. Der Klinker kann zur weiteren Bildung gewünschter Phasen während der Abkühlung den Bereich von 900°C bis 750°C für einen Zeitraum von 5 min bis 120 min, vorzugsweise von 10 min bis 60 min durchlaufen. Abschließend oder aber auch ohne eine verzögerte Abkühlung im Bereich von 900° bis 750°C wird der Klinker in an sich bekannter Weise rapide abgekühlt, so dass weitere Phasenumwandlungen verhindert werden.

Die Reaktivität des Klinkers kann z.B. durch die Erhöhung der Feinheit und/oder der Gehalte an α C₂S gezielt, entsprechend der jeweiligen Anforderung des Bindemittels, eingestellt bzw. optimiert werden. Dies kann ebenfalls durch die Zugabe von Mineralisatoren zum Rohmehl erreicht werden, wobei ein Teil, bis hin zum überwiegenden Teil, des Dicalciumsilikates als α Polymorph von C₂S und/oder in Form von Mischkristallen beziehungsweise von dotiertem "α" C₂S, wie zum Beispiel in Gegenwart von P₂O₅ als Calcium-Phosphat-Silikat [Ca₂SiO₄•0.05Ca₃(PO₄)₂], vorliegt. Die Bildung mindestens einer Schmelzphase (z.B. eine calciumsilikatische Schmelzphase im System CaO-SiO₂-CaSO₄- ±Mineralisator aber auch im System CaO-Al₂O₃(Fe₂O₃)-SiO₂-CaSO₄- ±Mineralisator), wird begünstigt bzw. hervorgerufen.

Überraschenderweise hat sich des Weiteren gezeigt, dass die Aufheizrate sowie der Einsatz von Mineralisatoren (z.B. Ca₃P₂O₈, CaF₂, K₂PO₄, Na₂PO₄, Na₂CO₃, K₂CO₃, FeCl₃, MgCl₂, Na₂[B₄O₅(OH)₄]·8H₂O, BaSO₄, etc.) einen signifikanten Einfluss auf die Zusammensetzung des Klinkers und die Menge und Anteile der reaktiven Phasen ausüben. Eine hohe Aufheizrate von z.B. mehr als 1000 °C/min, vorzugsweise mehr als 2000 °C/min , insbesondere mehr als 3500 °C/min. stabilisiert C₅S₂$ auch noch bei höheren Temperaturen, ebenso wie der Einsatz von Mineralisatoren. Eine hohe Aufheizrate wird erreicht, indem man den Ofen auf die gewünschte Zieltemperatur einstellt, d.h. das Rohmehl wurde direkt bei der entsprechenden Temperatur gesintert. Bei geringeren Aufheizraten bilden sich neben Ternesit vermehrt Polymorphe von α C₂S sowie Mischkristallen von α C₂S und dem Mineralisator.

Die Bildung einer Schmelzphase kann gezielt durch die Wahl der Aufheizrate, der maximalen Brenntemperatur, der Abkühlungsrate und/oder die Zugabe von Mineralisatoren gesteuert werden.

Der C₅S₂$ als Hauptkomponente enthaltende Klinker bzw. ein daraus durch Mahlen ohne Zusätze erhaltener Zement enthält erfindungsgemäß die folgenden Komponenten in den angegebenen Anteilen:
- C₅S₂$ 20 bis 100 Gew.-%, bevorzugt 30 bis 95 Gew.-% und noch stärker bevorzugt 40 bis 90 Gew.-%
- (α, β) C₂S 0 bis 80 Gew.-%, bevorzugt 5 bis 70 Gew.-% und noch stärker bevorzugt 10 bis 60 Gew.-%
- C₄(AₓF₍₁₋ₓ₎)₃$ 0 bis < 15 Gew.%, bevorzugt 3 bis 12 Gew.-% und noch stärker bevorzugt 5 bis 10 Gew.-%
- C₂(A_{y}F_{(1-y)}) 0 bis 30 Gew.-%, bevorzugt 5 bis 20 Gew.-% und noch stärker bevorzugt 8 bis 15 Gew.-%
- Reaktive Aluminate 0 bis 20 Gew.-%, bevorzugt 1 bis 15 Gew.-% und noch stärker bevorzugt 3 bis 10 Gew.-%
- Periklas (M) 0 bis 25 Gew.-%, bevorzugt 1 bis 15 Gew.-% und noch stärker bevorzugt 2 bis 10 Gew.-%
- Nebenphasen 0 bis 30 Gew.-%, bevorzugt 3 bis 20 Gew.-% und noch stärker bevorzugt 5 bis 10 Gew.-%
bezogen auf die gesamte Menge an Klinker/Zement, wobei sich die Anteile der Phasen zu 100% addieren.

Die Angabe (α, β) C₂S bedeutet, dass es sich um Polymorphe von C₂S und deren Gemische handeln kann, wobei die reaktiven α Polymorphe (z.B. α, α'_{L}, α'_{H}) bevorzugt werden. Vorzugsweise sind mindestens 5 Gew.-% α Polymorphe von C₂S enthalten, da diese vorteilhaft zu einer hohen Frühfestigkeit beitragen.

Durch die Zugabe von Mineralisatoren zum Rohmehl kann ein Teil, bis hin zum überwiegenden Teil, des Dicalciumsilikates in Form von Mischkristallen als dotiertes "α" C₂S, wie zum Beispiel in Gegenwart von P₂O₅ als Calcium-Phosphat-Silikat [Ca₂SiO₄•0.05Ca₃(PO₄)₂], vorkommen. Solche Verbindungen fallen ebenfalls in die Gruppe der reaktiven α C₂S Polymorphe und den Schutzbereich der vorliegenden Erfindung. Ebenfalls kann der etwaige Mineralisator, in Abhängigkeit von der zugesetzten Menge, der Aufheizrate, etc., in die Struktur von z.B. C₅S₂$ eingebaut werden.

Bei der Phase C₄(AₓF₍₁₋ₓ₎)₃$ liegt x im Bereich von 0,1 bis 1, vorzugsweise von 0,8 bis 0,95. Bei der Phase C₂(A_{y}F_{(1-y)}) liegt y im Bereich von 0,2 bis 0,8 und vorzugsweise im Bereich von 0,4 bis 0,6.

Unter reaktiven Aluminaten sind zum Beispiel, aber nicht ausschließlich, C₃A, CA und C₁₂A₇ zu verstehen.

Als Nebenphasen können zum Beispiel, aber nicht ausschließlich, Alkali/ErdalkaliSulfate, Quarze, Spinelle, Olivine, Pyroxene, Vertreter der Melilith- und Merwinit-Gruppe, Apatite, Ellestadite, Silicocarnotit, Freikalk, Spurrit, Quarz und/oder ein röntgenamorpher Phasenbestand / eine Glasphase, in einem Anteil von 0 Gew.-% bis 30 Gew.-%, vorzugsweise von 2 Gew.-% bis 20 Gew.-% und besonders bevorzugt von 5 Gew.-% bis 15 Gew.-% auftreten. Der Freikalkgehalt des Klinkers liegt unter 5 Gew.-%, vorzugsweise unter 2 Gew.-% und besonders bevorzugt unter 1 Gew.-%. In bevorzugter Ausführung enthält der Ternesitklinker 1 bis 10 Gew.-%, vorzugsweise 2 bis 8 Gew.-% und noch stärker bevorzugt 3 bis 5 Gew.-% mindestens einer röntgenamorphen Phase / einer Glasphase.

Ein Ternesitklinker enthaltend unter anderem einen röntgenamorphen Phasenbestand / eine Glasphase wurde bisher nicht beschrieben und ist auch dem Patent EP 1 171 398 B1 nicht zu entnehmen.

Die Gehalte der Hauptoxide eines C₅S₂$ als Hauptphase enthaltenden, separat hergestellten Klinkers umfassen folgende Bereiche:
- CaO 40 bis 70 Gew.-%, bevorzugt 45 bis 60 Gew.-% und noch stärker bevorzugt 50 bis 55 Gew.-%
- SiO₂ 5 bis 30 Gew.-%, bevorzugt 10 bis 25 Gew.-% und noch stärker bevorzugt 15 bis 23 Gew.-%
- SO₃ 3 bis 30 Gew.-%, bevorzugt 5 bis 26 Gew:-% und noch stärker bevorzugt 8 bis 22 Gew.-%
- ∑(Al₂O₃+Fe₂O₃) 0 bis 40 Gew.-%, bevorzugt 5 bis 30 Gew.-% und noch stärker bevorzugt 8 bis 20 Gew.-%
- MgO 0 bis 25 Gew.-%, bevorzugt 2 bis 15 Gew.-% und noch stärker bevorzugt 5 bis 10 Gew.-%
bezogen auf die gesamte Menge an Klinker/Zement, wobei sich die Anteile der Gehalte zu 100% addieren.

Eine gezielte Herstellung eines C₅S₂$ Klinkers, die Stabilisierung von C₅S₂$ bei höheren Temperaturen, die mögliche erhöhte Bildungsrate von α C₂S, Mischkristallen des Dicalciumsilikats sowie die Bildung mindestens einer Schmelzphase im Klinker und der Einsatz des Ternesitklinkers als Additiv in Kombination mit reaktiven, aluminiumreichen Systemen zur Steigerung der Frühfestigkeit von Bindemitteln wurde bisher nicht beschrieben. Es ist ein völlig neuartiger Ansatz zu einer Erhöhung der Frühfestigkeit und/oder der Dauerhaftigkeit von hydraulischen und latent-hydraulischen Bindemittelsystemen.

Zur Herstellung von Zement bzw. Bindemittelmischungen wird erfindungsgemäß hergestelltes oder herstellbares Ternesit bzw. ternesitreicher Klinker entweder gemeinsam mit einer oder mehreren oder allen oder getrennt von den weiteren zu mahlenden Bindemittelkomponenten in an sich bekannter Weise mit oder ohne zusätzliche Sulfatträger auf übliche Zementfeinheiten (nach Blaine) von 2000 bis 10000 cm²/g, vorzugsweise von 3000 bis 6000 cm²/g und besonders bevorzugt von 4000 bis 5000 cm²/g gemahlen.

Als Sulfatträger eignen sich besonders Alkali- und / oder Erdalkalisulfate, vorzugsweise in Form von Gips und / oder Halbhydrat und / oder Anhydrit aber auch Magnesium-, Natrium- und Kaliumsulfat. Da Ternesit im Verlauf der Reaktion ebenfalls Sulfat bereitstellt, kann auch mit weniger anderweitigem Sulfatträger oder ohne einen solchen ein gut verarbeitbares Bindemittel erhalten werden.

Der Klinker mit der Hauptphase C₅S₂$ kann bei geeigneter Zusammensetzung, wie zum Beispiel, aber nicht ausschließlich, durch erhöhte Gehalte an reaktiven Aluminaten und Ferraten, als eigenständiges Bindemittel eingesetzt werden. Es ist jedoch vorteilhafter diesen z.B. mit Portland-, Calciumsulofaluminat(ferrit) (Belit)-, Calciumaluminat-, - Klinker, - Zement oder - Bindemittel zu Bindemitteln mit optimierter Zusammensetzung zu kombinieren.

Dem Bindemittel können hydraulisch reaktive Materialien wie Calciumaluminat, Calciumaluminatzement, Calciumsulfoaluminat, Calciumsulfoaluminatzement, Geopolymerzement und/oder latent-hydraulische Materialien wie gebrannter Ölschiefer, Gehlenitgläser oder Kombinationen davon, zugefügt werden. Die Mischung mit hydraulisch oder latent-hydraulisch reaktiven Komponenten ist zum Erreichen einer nutzbaren hydraulischen Reaktivität nicht erforderlich, vielmehr zeigt der zu Zement gemahlenen Ternesit durch Kombination mit einer nicht hydraulisch reaktiven Aluminiumquelle die gewünschte hydraulische Reaktivität.

Bevorzugt enthält das Bindemittel außerdem Zusatzmittel und/oder Zusatzstoffe sowie ggfs. weitere hydraulisch aktive Komponenten. Bei den Zusatzstoffen kann es sich um latent hydraulische, puzzolanische und/oder nicht hydraulisch aktive (z.B. gemahlener Kalkstein / Dolomit, gefälltes CaCO₃ Mg(OH)₂, Ca(OH)₂, Aluminiumhydroxide [z.B. amorphes Al(OH)₃], lösliche Alkali-Aluminate [z.B. Na₂Al₂O₄], Silica Fume) Komponenten handeln.

Vorzugsweise enthält der Zement bzw. die Bindemittelmischung außerdem als Zusatzmittel einen oder mehrere Abbinde- und / oder Erhärtungsbeschleuniger, vorzugsweise ausgewählt unter Komponenten mit verfügbarem Aluminium beziehungsweise solchen, die in Kontakt mit Wasser Aluminium, zum Beispiel in der Form von Al(OH)₄⁻ oder amorphes Al(OH)₃-Gel, freisetzen, wie zum Beispiel, aber nicht ausschließlich, lösliche Alkali-Aluminate [z.B. Na₂Al₂O₄, K₂Al₂O₄, etc.], Aluminiumhydroxid (z.B. amorphes Al(OH)₃). Des Weiteren kann der Zement bzw. die Bindemittelmischung als Zusatzmittel einen oder mehrere Abbinde- und / oder Erhärtungsbeschleuniger, ebenfalls in Kombination mit den vorgenannten Komponenten mit verfügbarem Aluminium, vorzugsweise ausgewählt unter Lithiumsalzen und -hydroxiden, anderen Alkalisalzen und -hydroxiden, Alkalisilikaten enthalten.

Zusätze, wie zum Beispiel Alkali-Aluminate und Alkalisalze, -silikate und -hydroxide, welche den pH-Wert der Lösung und damit einhergehend die Reaktivität von C₅S₂$ zusätzlich erhöhen, sind besonders bevorzugt und können in einer Menge im Bereich von 0,1 bis 10 Gew.-%, vorzugsweise von 0,5 bis 5 Gew.-% und noch stärker bevorzugt von 1 bis 2 Gew.-% dosiert werden.

Es ist weiter bevorzugt, wenn Betonverflüssiger und / oder Fließmittel und / oder Verzögerer, vorzugsweise auf Basis von Ligninsulfonaten, sulfoniertem Naphthalin-, Melamin- oder Phenolformaldehydkondensat, oder auf Basis von Acrylsäure-Acrylamidgemischen oder Polycarboxylatethern oder auf Basis von phosphatierten Polykondensaten, phosphatierten Alkylcarbonsäure und Salzen dieser, (Hydroxy)-Carbonsäuren und Carboxylate, Borax, Borsäure und Borate, Oxalate, Sulfanilsäure, Aminocarbonsäuren, Salicylsäure und Acetylsalicylsäure, Dialdehyde enthalten sind.

Der C₅S₂$ enthaltende Klinker, besonders wenn dieser wenig andere Phasen aufweist, lässt sich mit sehr geringem Energieeinsatz mahlen, so dass dieser, wenn zum Beispiel eine höhere Reaktivität (schnellere Umsetzung / Verbrauch) von C₅S₂$ erwünscht ist, auf höhere Feinheiten des C₅S₂$-enthaltenden Klinkers durch separates Mahlen oder Vormahlen eingestellt werden kann. Das ermahlene Produkt kann, wenn für eine spezielle Anwendung benötigt, auf eine Partikelgrößenverteilung mit d₅₀ kleiner 20 µm und d₉₀ kleiner 100 µm, beziehungsweise einem d₅₀ kleiner 5 µm und einem d₉₀ kleiner 20 µm aber auch einem d₅₀ kleiner 0,1 µm und einem d₉₀ kleiner 2 µm aufweisen.

Eine intensive Aufmahlung des C₅S₂$ enthaltenden Klinkers kann dazu führen, dass der Phasenbestand des Klinkers, z.B. C₅S₂$, teilweise (oft 3 bis 20 %) bis nahezu vollständig (> 90 %) röntgenamorph vorliegt. Dies geht mit einer signifikanten Erhöhung der Reaktivität einher und erlaubt die Formulierung von neuartigen, hoch reaktiven Bindemittelsystemen.

Bei der Verarbeitung des erfindungsgemäßen Zementes bzw. eines diesen enthaltenden Bindemittels ist ein Wasser / Bindemittelwert von 0,2 bis 2 geeignet, bevorzugt von 0,3 bis 0,8 und besonders bevorzugt von 0,45 bis 0,72.

Zur Herstellung des Bindemittels können Einzelkomponenten oder Komponentengemische verwendet werden, je nach Qualität und Zusammensetzung der verfügbaren Rohstoffe bzw. Klinker.

Ein weiterer Vorteil des mit dem erfindungsgemäß hergestellten Ternesit (Klinker) erhältlichen Zements bzw. der Bindemittelmischung daraus ist die Bildung verschiedener Phasen im Zuge der Hydratation (z.B. Ettringit [AFₜ], Monophasen [AFₘ], Metall-Metall Hydroxisalze [LDH], etc.), die verschiedene Schwermetalle sowie weitere Schadstoffe (zum Beispiel, Chloride, etc.) in ihrer Struktur einbauen und somit dauerhaft fixieren können.

Die Erfindung soll anhand der folgenden Beispiele erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

### Beispiele

In Tabelle 2 sind die verwendeten Rohstoffe, mit denen die im Folgenden beschriebenen Beispiele durchgeführt wurden, anhand ihrer oxidischen Hauptbestandteile und ihrer Mahlfeinheit charakterisiert. Der Gewichtsverlust nach einem Tempern bei 1050 °C ist ebenfalls angegeben. Tabelle 3 zeigt die mineralogische Phasenzusammensetzung der verwendeten industriellen Nebenprodukte.

**Tabelle 2: Elementare Zusammensetzung der verwendeten Rohstoffe (RFA)**

| Rohstoff | | Kalkstein | Flugasche | Sulfatträger | Al-Korr. | Metakaolin |
|---|---|---|---|---|---|---|
| Probe | | K1 | FA1 | MicroA | Al(OH)₃ | MK |
| RFA | Einheit | | | | | |
| GV 1050 °C | % | 43,09 | 0,82 | 4,64 | 34,64 | 1,91 |
| SiO₂ | % | 1,53 | 28,50 | 4,17 | 0,00 | 48,00 |
| Al₂O₃ | % | 0,35 | 12,50 | 1,36 | 65,36 | 41,60 |
| TiO₂ | % | 0,03 | 1,05 | 0,04 | 0,00 | |
| MnO | % | 0,01 | 0,18 | 0,00 | 0.00 | |
| Fe₂O₃ | % | 0,19 | 5,18 | 0,37 | 0,00 | 1,80 |
| CaO | % | 54,50 | 37,40 | 37,40 | 0,00 | 5,70 |
| MgO | % | 0,22 | 4,81 | 1,82 | 0,00 | 0,10 |
| K₂O | % | 0,04 | 0,28 | 0,28 | 0,00 | 0,95 |
| Na₂O | % | 0,00 | 0,07 | 0,06 | 0,00 | |
| SO₃ | % | 0,01 | 7,71 | 49,80 | 0,00 | |
| P₂O₅ | % | 0,01 | 1,27 | 0,00 | 0,00 | |
| Summe | | 99,98 | 99,77 | 99.94 | 100,00 | 100,06 |
| | | | | | | |
| Amorph | % | / | 38,0 | / | / | >95 |
| Dichte | g/cm³ | 2,64 | 2,82 | | | 2,54 |
| Mahlfeinheit nach Blaine | cm²/g | 3350 | 4380 | | | |

**Tabelle 3: Mineralogische Phasenzusammensetzung der verwendeten Flugasche FA1 (QXRD nach Rietveld)**

| Mineral | Einheit | |
|---|---|---|
| Quarz | Gew.-% | 11,5 |
| Cristobalit | Gew.-% | 0,4 |
| Freikalk | Gew.-% | 9,3 |
| Periklas | Gew.-% | 2,8 |
| Anhydrit | Gew.-% | 10,4 |
| Gehlenit | Gew.-% | 6,3 |
| Merwinit | Gew.-% | 4,9 |
| Maghemit | Gew.-% | 1,2 |
| Hämatit | Gew.-% | 0,9 |
| Ye'elimit | Gew.-% | 3,1 |
| C₂S | Gew.-% | 8,1 |
| C₄AF | Gew.-% | 3,1 |
| Amorph | Gew.-% | 38,0 |

### Beispiel 1 Tₚᵤᵣ

Eine stöchiometrische Mischung aus CaCO₃ [Merck, p.a.], CaSO₄ [Merck, p.a.] und Quarzmehl [Merck, p.a.] wurde 1 h bei 1100°C gebrannt, anschließend rapide gekühlt, gemahlen und ein weiteres Mal 1 h bei 1100°C gebrannt und rapide gekühlt.

### Beispiel 2 TK_{FA}

Die Rohmischung bestand aus 45 Gew.-% Kalkstein (K1) + 27 Gew.-% FA1 , 20 Gew.-% MicroA und 8 Gew.-% Quarzmehl (Merck, p.a.). Das Rohmehl wurde in bei 1100°C gesintert und durchlief nach dem Sintern zur Temperung ein Kühlprogramm bei dem die Temperatur über etwa 35 min von 1100°C auf 850°C gesenkt wurde. Der Klinker wurde dann rapide an der Luft abgekühlt.

### Beispiel 3 TK_{AGS}

Die Rohmischung bestand aus 58 Gew.-% K1 + 8 Gew.-% MK, 24 Gew.-% MircoA und 10 Gew.-% Quarzmehl (Merck, p.a.). Das Rohmehl durchlief dasselbe Programm wie in Beispiel 2.

### Beispiel 4

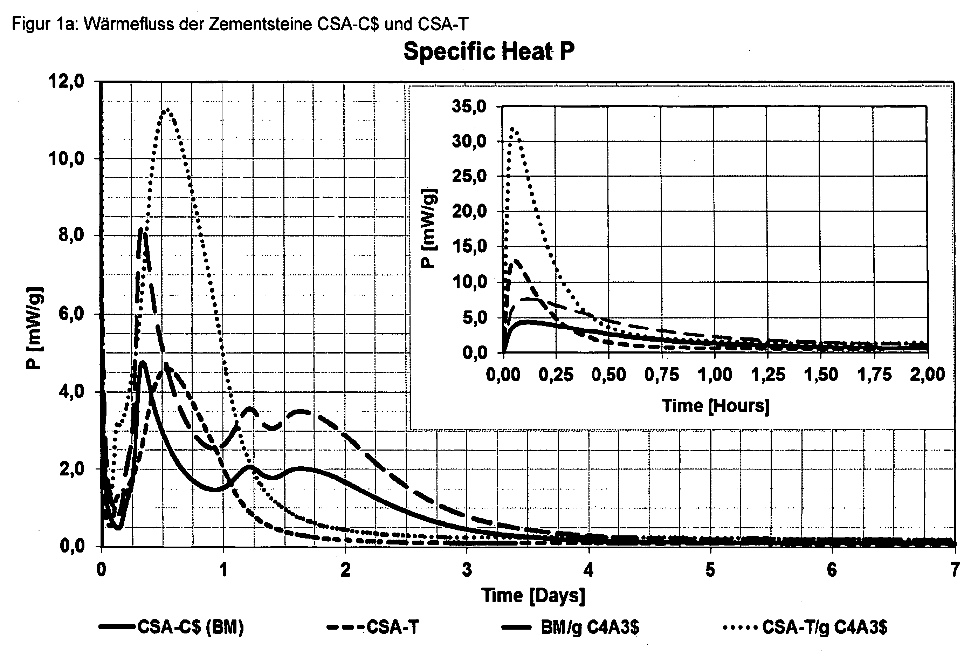

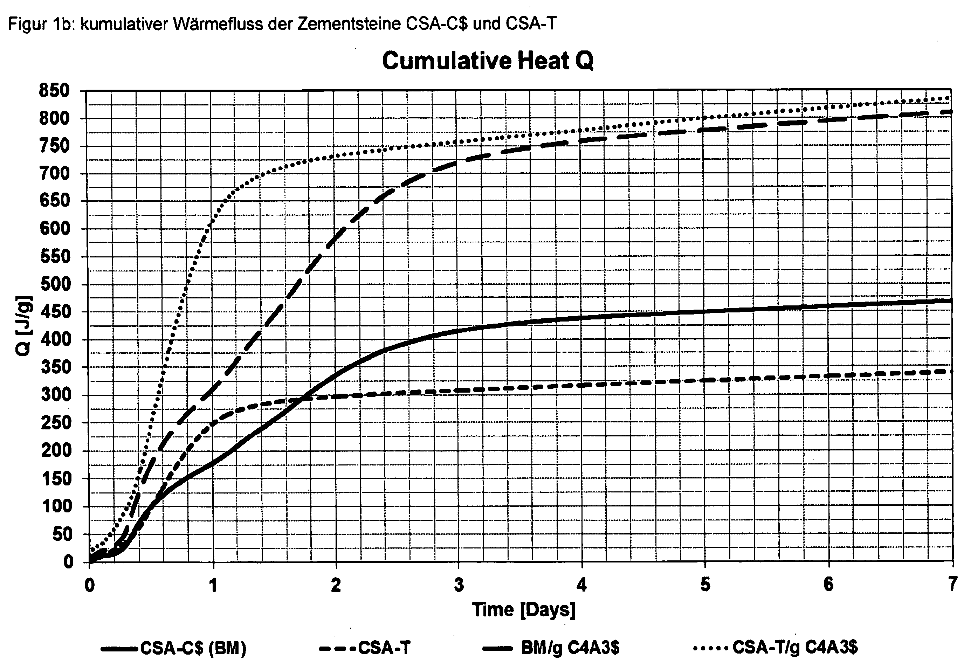

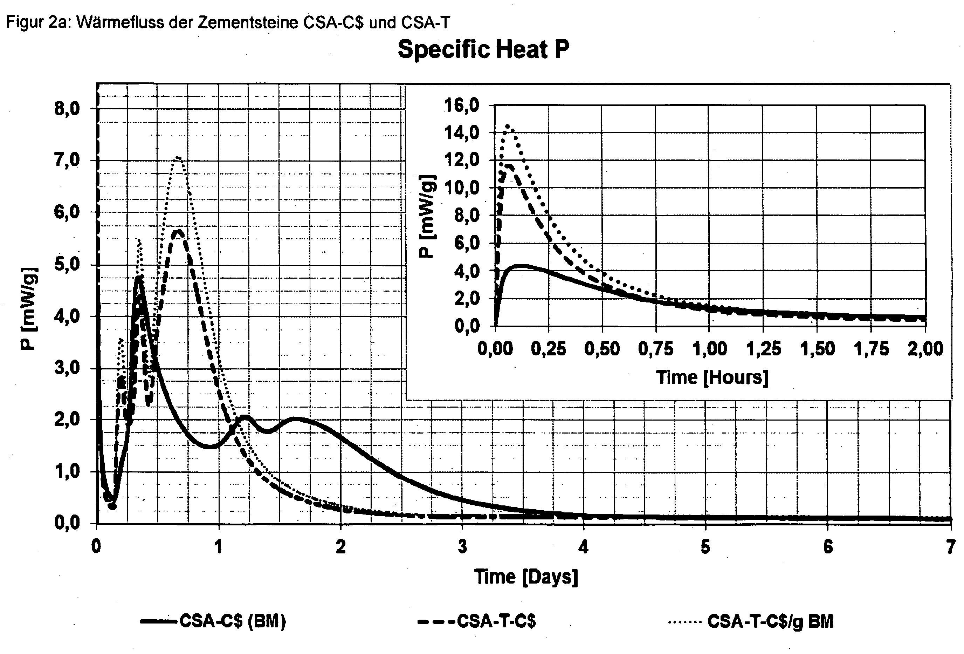

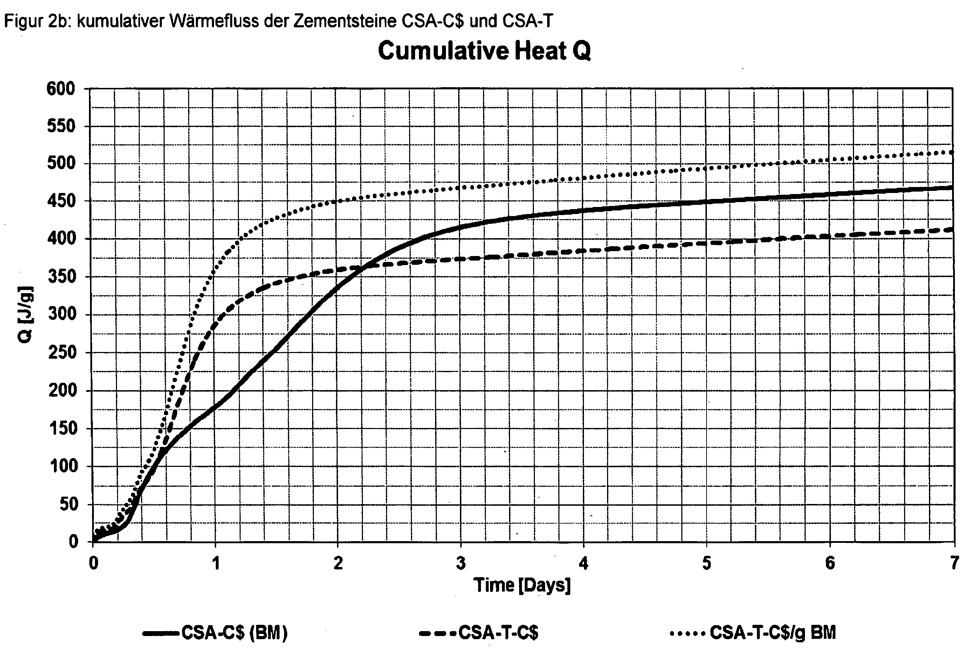

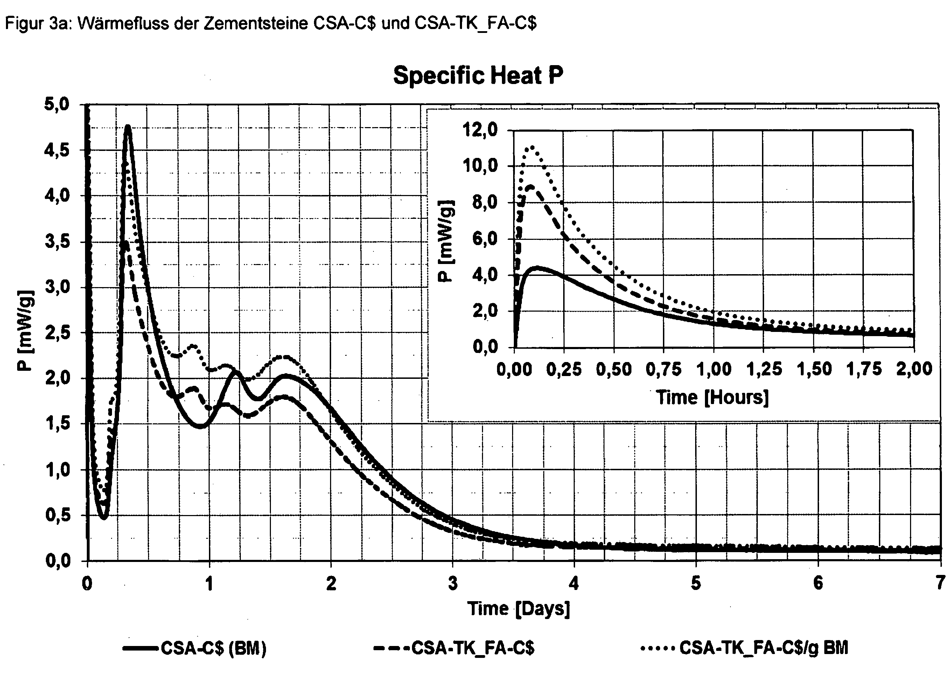

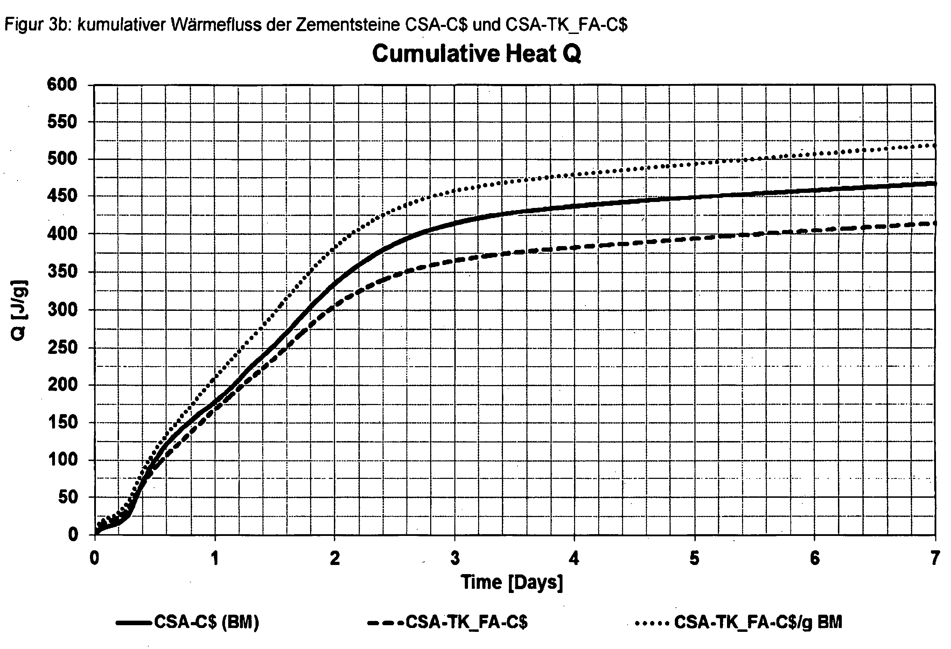

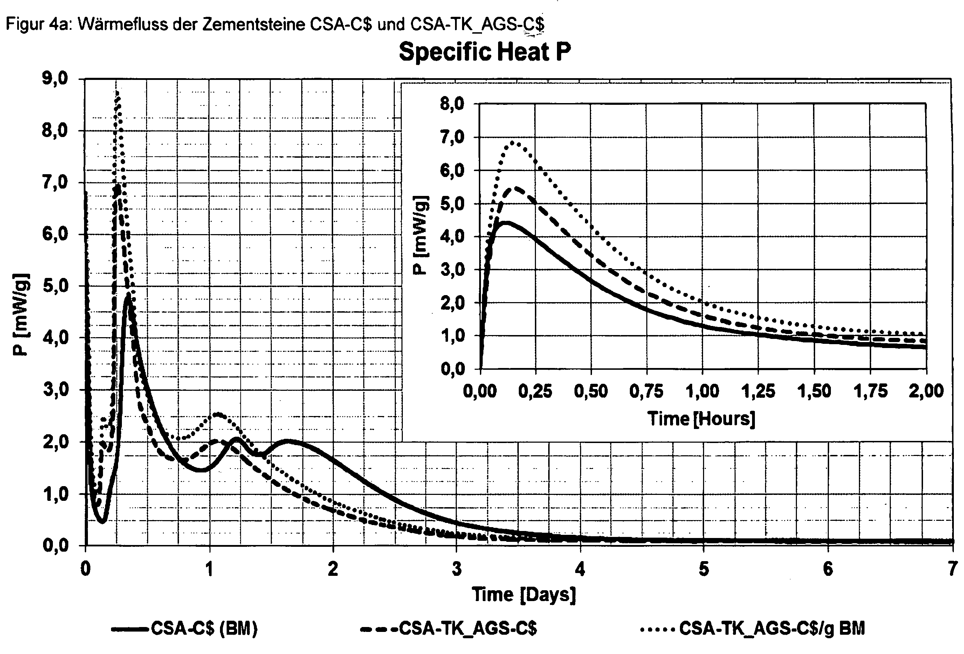

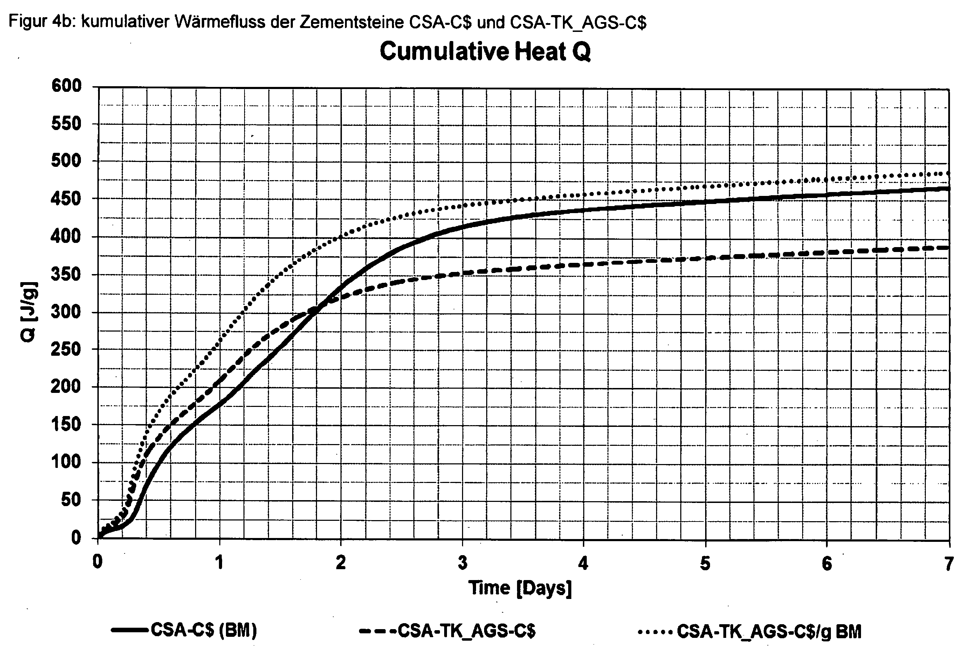

Verschiedene Bindemittel wurden aus einem kommerziellen CSA Zement (Zusammensetzung siehe Tabelle 6) und den drei Ternesitqualitäten aus den Beispielen 1-3 sowie Micro A gemischt. In Tabelle 4 sind die Zusammensetzungen der Ternesite und in Tabelle 5 die Mischungsverhältnisse mit dem Zement aufgelistet, die Figuren 1 bis 4 geben den Wärmefluss und den kumulativen Wärmefluss der Mischungen beim Anmachen mit Wasser mit einem W/B von 0,7 wieder. Tabelle 7 gibt die Mineralogie der Zemente entsprechend Beispiel 4 (QXRD nach Rietveld) und TG Daten (chem. gebundenes Wasser) der Zemente sowie der daraus hergestellten Zementsteine, normiert auf 100% Paste; W/Z 0,7 an.

**Tabelle 4: Chemische (berechnet) und mineralogische Zusammensetzung der Klinker aus den Beispielen 1 bis 3**

| **Oxide** | **Tₚᵤᵣ** | **TK_{FA}** | **TK_{AGS}** |
|---|---|---|---|
| SiO₂ | 25,00% | 21,30% | 22,16% |
| Al₂O₃ | -- | 4,75% | 4,94% |
| TiO₂ | -- | 0,38% | 0,04% |
| MnO | -- | 0,07% | 0,01% |
| Fe₂O₃ | -- | 1,96% | 0,45% |
| CaO | 58,34% | 53,20% | 55,34% |
| MqO | -- | 2,23% | 0,77% |
| K₂O | -- | 0,19% | 0,22% |
| Na₂O | -- | 0,04% | 0,02% |
| SO₃ | 16,66% | 15,44% | 16,06% |
| P₂O₅ | -- | 0,44% | 0,01% |

| **Phasen** | | | |
|---|---|---|---|
| Anhydrit | 0,4 | 0,3 | 0,2 |
| C₃A (cub) | -- | 2,2 | - |
| C₃A (orth) | -- | 1,2 | 0,4 |
| C₂S a'H | -- | 2,7 | 1,4 |
| C₂S beta | -- | 5,7 | 3,2 |
| C₂S gamma | -- | 1,1 | 0,4 |
| ΣC₂S | -- | 9,5 | 5,0 |
| Ternesit | 99,2 | 74,9 | 85,5 |
| Freikalk | <0,1 | 0,3 | 0,3 |
| Periklas | -- | 1,2 | 0,5 |
| C₄A₃S | -- | 9,3 | 7,0 |
| Auqit | -- | 1,2 | 1,1 |
| Quarz | 0,4 | -- | -- |

| **Verhältnisse** | | | |
|---|---|---|---|
| CaO/Al₂O₃ | -- | 11,21 | 11,21 |
| Al₂O₃/Fe₂O₃ | -- | 2,42 | 10,92 |
| SO₃/(Al₂O₃+Fe₂O₃) | -- | 2,30 | 2,98 |
| SO₃/SiO₂ | 0,67 | 0,72 | 0,72 |
| CaO/SO₃ | 3,50 | 3,45 | 3,45 |
| CaO/SiO₂ | 2,33 | 2,50 | 2,50 |
| MgO/SiO₂ | 0,00 | 0,10 | 0,03 |

**Tabelle 5: Mischungen eines kommerziellen Calciumsulfoaluminat-Zements mit Klinkern entsprechend Beispiel 1-3**

| Mischung | CSA | Tₚᵤᵣ | TK_{FA} | TK_{AGS} | Micro A |
|---|---|---|---|---|---|
| CSA-C$ | 85 % | | | | 15 % |
| CSA-T | 60 % | 40 % | | | |
| CSA-T-C$ | 68 % | 20 % | | | 12 % |
| CSA-TK_FA-C$ | 68 % | | 20 % | | 12 % |
| CSA-TK_AGS-C$ | 68 % | | | 20 % | 12 % |

**Tabelle 6: Chemische Zusammensetzung des verwendeten kommerziellen Calciumsulfoaluminät-Zements**

| | | China CSA |
|---|---|---|
| GV 1050 °C | % | 0,18 |
| SiO₂ | % | 6,93 |
| Al₂O₃ | % | 36,48 |
| TiO₂ | % | 1,64 |
| MnO | % | 0,00 |
| Fe₂O₃ | % | 2,24 |
| CaO | % | 40,61 |
| MgO | % | 2,94 |
| K₂O | % | 0,18 |
| Na₂O | % | 0,00 |
| SO₃ | % | 8,61 |
| P₂O₅ | % | 0,14 |
| **Sum.** | % | **99,94** |

**Tabelle 7: Mineralogie der Zemente und Zementsteine von Beispiel 4**

| **CSA-C$** | **0 Tage** | **7 Tage** | | **CSA-T** | **0 Tage** | **7 Tage** |
|---|---|---|---|---|---|---|
| Ye'elimit | 33,8% | 0,8% | | Ye'elimit | 23,8% | 0,0% |
| Anhydrit | 8,8% | 2,0% | | Belit (gesamt) | 5,7% | 5,6% |
| Belit (gesamt) | 8,1% | 8,0% | | C₃A cub | 0,9% | 0,4% |
| C₃A cub | 1,3% | 1,0% | | C₄AF | 0,9% | 0,6% |
| C₄AF | 1,3% | 0,5% | | Ternesit (C₅S₂$) | 23,5% | 20,3% |
| Ettringit | 0,0% | 29,7% | | Ettringit | 0,0% | 10,8% |
| Strätlingit | 0,0% | 2,2% | | Strätlingit | 0,0% | 2,4% |
| Spuren | 5,6% | 7,0% | | Spuren | 4,0% | 10,4% |
| Amorph | 0,0% | 41,6% | | Amorph | 0,0% | 33,7% |
| Wasser | 41,2% | 7,1% | | Wasser | 41,2% | 15,8% |
| | | | | | | |

| **CSA-T-C$** | **0 Tage** | **7 Tage** | | **CSA-TK_FA-C$** | **0 Tage** | **7 Tage** |
|---|---|---|---|---|---|---|
| Ye'elimit | 27,0% | 0,8% | | Ye'elimit | 28,1% | 0,4% |
| Anhydrit | 7,1% | 1,8% | | Anhydrit | 7,1% | 1,0% |
| Belit gesamt) | 6,4% | 6,4% | | Belit gesamt) | 7,6% | 7,7% |
| C₃A cub | 1,0% | 0,9% | | C₃A cub | 1,4% | 1,3% |
| C₄AF | 1,0% | 0,5% | | C₄AF | 1,0% | 0,8% |
| Ternesit (C₅S₂$) | 11,8% | 10,1% | | Ternesit (C₅S₂$) | 8,8% | 5,5% |
| Ettringit | 0,0% | 25,8% | | Ettringit | 0,0% | 25,1% |
| Strätlingit | 0,0% | 2,1% | | Strätlingit | 0,0% | 2,4% |
| Spuren | 4,5% | 6,4% | | Spuren | 4,8% | 6,5% |
| Amorph | 0,0% | 35,0% | | Amorph | 0,0% | 39,1% |
| Wasser | 41,2% | 10,2% | | Wasser | 41,2% | 10,3% |
| | | | | | | |

| **CSA-TK_AGS-C$** | **0 Tage** | **7 Tage** | | | | |
|---|---|---|---|---|---|---|
| Ye'elimit | 27,8% | 0,4% | | | | |
| Anhydrit | 7,1% | 1,5% | | | | |
| Belit (gesamt) | 7,0% | 7,2% | | | | |
| C₃A cub | 1,0% | 0,8% | | | | |
| C₄AF | 1,0% | 0,4% | | | | |
| Ternesit (C₅S₂$) | 10,1% | 8,1% | | | | |
| Ettringit | 0,0% | 23,5% | | | | |
| Strätlingit | 0,0% | 2,2% | | | | |
| Spuren | 4,7% | 5,3% | | | | |
| Amorph | 0,0% | 39,5% | | | | |
| Wasser | 41,2% | 11,2% | | | | |

### Beispiel 5

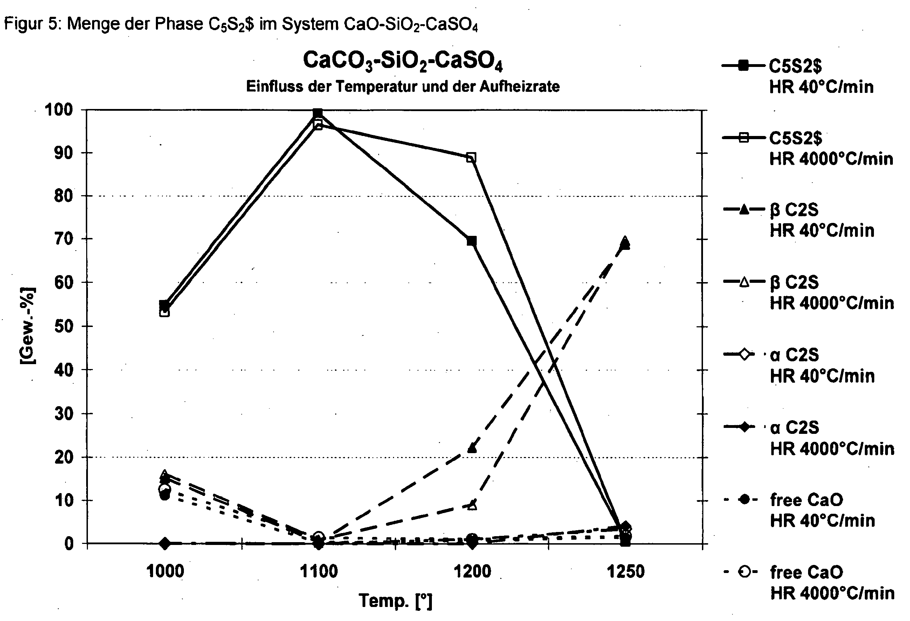

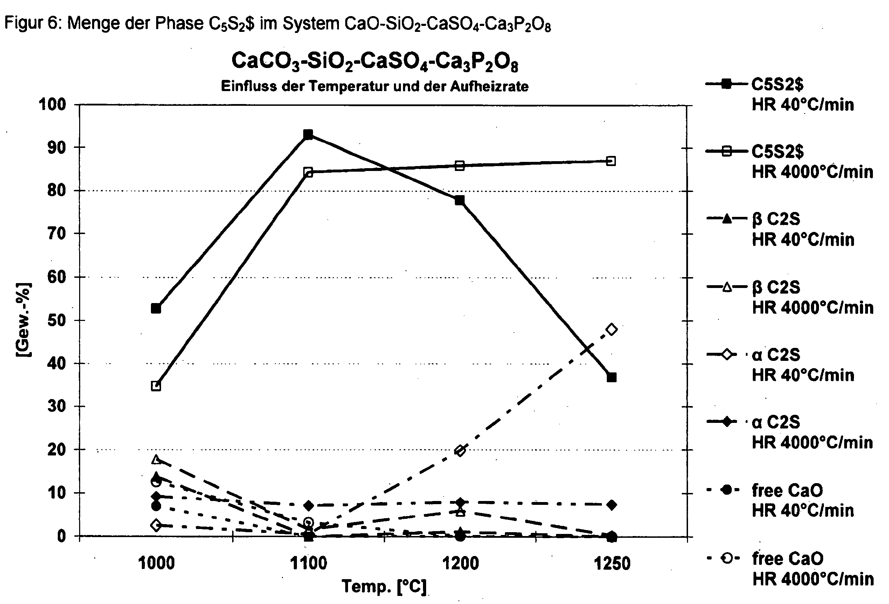

Eine stöchiometrische Mischung aus CaCO₃ [Merck, p.a.], CaSO₄ [Merck, p.a.], Quarzmehl [Merck, p.a.] mit und ohne 0,1 Mol.-% Ca₃P₂O₈, bei gleichbleiben dem CaO-SiO₂-Verhältnis, wurde für 1 h bei verschiedenen Temperaturen und mittels verschiedener Aufheizraten (30 min Aufheizen von 20 °C zu Zieltemp. vs. direktes Einbringen des Rohmehls bei der Zieltemp.) gebrannt, anschließend rapide gekühlt, gemahlen und ein weiteres Mal 1 h bei der Zieltemp. gebrannt und rapide gekühlt. Dies ergab Ternesitklinker verschiedener Qualitäten. In den Figuren 5 und 6 ist jeweils die Menge C₅S₂$ (■), α C₂S (◇), β C₂S (▲) und Freikalk (●) in Abhängigkeit von der maximalen Temperatur beim Sintern dargestellt. Die schwarzen Werte wurden bei normaler Aufheizrate von rund 40 °C/min. und die grauen Werte bei einer hohen Aufheizrate von rund 4000 °C/min. erhalten.

Es hat sich gezeigt, dass die Zugabe von Mineralisatoren ebenso wie eine hohe Aufheizrate die Klinkerphasenbildung beschleunigt / begünstigt (geringere Freikalkgehalte), die Bildung von reaktiven α C₂S Polymorphen, die Stabilisierung von C₅S₂$ zu höheren Temperaturen (>1200 °C, siehe Figur 5 und 6) und die Bildung eine röntgenamorphen Phase hervorruft.

### Beispiel 6

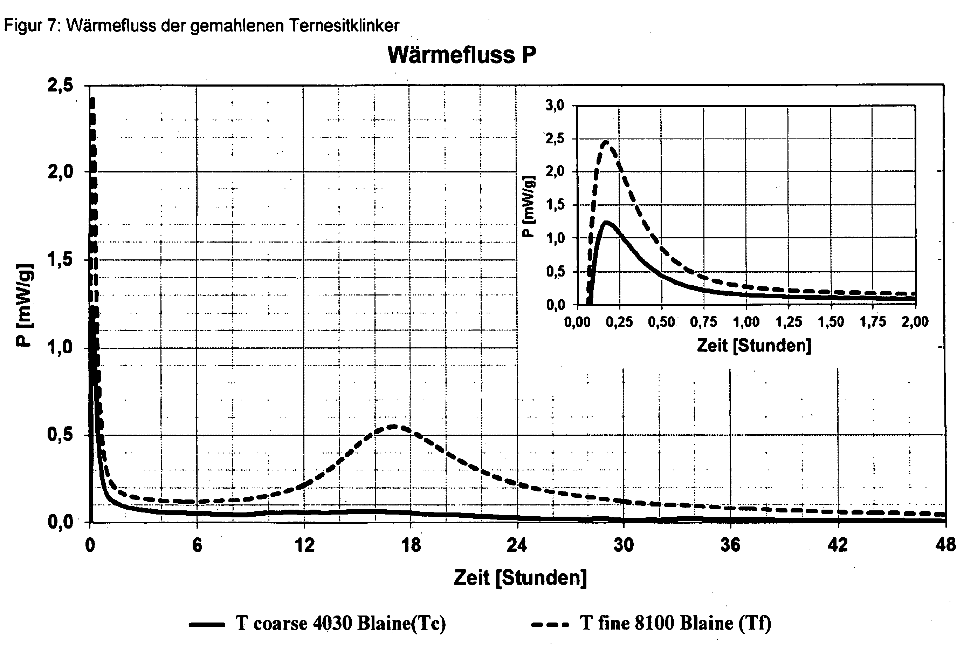

Ein Ternesitklinker entsprechend Beispiel 1 wurde auf zwei Feinheiten gemahlen. Figur 7 zeigt den Wärmefluss sowie kumulativen Wärmefluss des gemahlenen Ternesits beim Anmachen mit Wasser mit einem W/B von 0,5.

Es hat sich gezeigt, dass die Erhöhung der Feinheit die Reaktivität der Phase C₅S₂$ signifikant erhöht (siehe Figur 7).

## Patentansprüche

1. Verfahren zur Herstellung eines Ternesit-Klinkers, **dadurch gekennzeichnet, dass** eine Rohmehlmischung, die mindestens Quellen für CaO, SiO₂, und SO₃ enthält, gesintert wird, wobei die Temperatur beim Sintern im Bereich von 900 bis 1300 °C so eingestellt wird, dass der Ternesit-Klinker einen Gehalt an C₅S₂$ im Bereich von 20 bis 95 Gew.-%, C₂S im Bereich von 5 bis 80 Gew.-% und einen Gehalt an C₄(AₓF₍₁₋ₓ₎)₃$ mit x von 0,1 bis 1 von 0 bis unter 15 Gew.-%, jeweils bezogen auf das Gesamtgewicht des Klinkers, aufweist.

2. Verfahren gemäß Anspruch 1, **dadurch gekennzeichnet, dass** die Rohmehlmischung zusätzlich Quellen für Al₂O₃ sowie Fe₂O₃ enthält.

3. Verfahren gemäß Anspruch 1 oder 2, **dadurch gekennzeichnet, dass** C₅S₂$ durch Einbau eines oder mehrerer Fremdionen aus der Gruppe der Halogene, Nichtmetalle, Alkali- und Erdalkalimetalle, sowie Vertreter der Übergangs- und Halbmetalle und Metalle in die Kristallstruktur stabilisiert wird.

4. Verfahren gemäß mindestens einem der Ansprüche 1 bis 3, **dadurch gekennzeichnet, dass** man dem Rohmehl Materialien, welche Mineralisatoren, vorzugsweise Phosphat, Fluorid, Alkalien, Nitrat und/oder Chlorid bereitstellen, zufügt.

5. Verfahren gemäß mindestens einem der Ansprüche 1 bis 4, **dadurch gekennzeichnet, dass** eine Aufheizrate im Bereich von 10 bis 6000 °C/min eingestellt wird.

6. Verfahren gemäß mindestens einem der Ansprüche 3 bis 5, **dadurch gekennzeichnet, dass** die Temperatur beim Sintern im Bereich von 1100 bis 1300 °C liegt.

7. Verfahren gemäß mindestens einem der Ansprüche 1 bis 5, **dadurch gekennzeichnet, dass** die Temperatur beim Sintern in einem Bereich von 900 bis 1200 °C, vorzugsweise bei 1050 bis 1150 °C liegt.

8. Verfahren gemäß einem der Ansprüche 1 bis 7, **dadurch gekennzeichnet, dass** der Klinker, zusätzlich zu C₅S₂$ und C₄(AₓF₍₁₋ₓ₎)₃$. 0 bis 30 Gew.-% C₂(A_{y}F_{(1-y)}) mit y im Bereich von 0,2 bis 0,8, 0 bis 20 Gew.% reaktive Aluminate, 0 bis 25 Gew.-% Periklas (M) und 0 bis 30 Gew.-% Nebenphasen bezogen auf die gesamte Menge an Klinker, wobei sich die Anteile der Phasen zu 100% addieren, enthält.

9. Verfahren gemäß Anspruch 8, **dadurch gekennzeichnet, dass** mindestens eine röntgenamorphe Phase / eine Glasphase als Nebenphase im Bereich von 1 bis 10 Gew.-%, vorzugsweise 2 bis 8 Gew.-% und noch stärker bevorzugt 3 bis 5 Gew.-% vorliegt.

10. Verfahren gemäß mindestens einem der Ansprüche 1 bis 9, **dadurch gekennzeichnet, dass** der Ternesit-Klinker auf eine Feinheit (nach Blaine) von 2000 cm²/g bis 6000 cm²/g, vorzugsweise von 3000 cm²/g bis 5000 cm²/g, gemahlen wird.

11. Verfahren gemäß mindestens einem der Ansprüche 1 bis 9, **dadurch gekennzeichnet, dass** der Ternesit-Klinker auf eine Feinheit (nach Blaine) von 5000 bis 10000 cm²/g, vorzugsweise von 7000 cm²/g bis 9000 cm²/g, gemahlen wird.

12. Verfahren gemäß mindestens einem der Ansprüche 1 bis 9, **dadurch gekennzeichnet, dass** der Ternesit-Klinker auf eine Feinheit (nach Blaine) von über 10000 cm²/g gemahlen wird und von 3 bis 99 %, vorzugsweise von 5 bis 50 % des Phasenbestandes des Klinkers röntgeriamorph vorliegt.

## Claims

1. A method for producing a ternesite clinker, **characterized in that** a raw meal mixture, which contains at least sources for CaO, SiO₂, and SO₃, is sintered, wherein the temperature during sintering is adjusted in the range of 900 to 1300°C such that the ternesite clinker has a content of C₅S₂$ ranging from 20 to 95 % by weight and a content of C₄(AₓF₍₁₋ₓ₎)₃$, with x being 0.1 to 1, from 0 to less than 15% by weight, in each case relative to the total weight of the clinker.

2. The method according to claim 1, **characterized in that** the raw meal mixture additionally contains sources for Al₂O₃ and Fe₂O₃.

3. The method according to claim 1 or 2, **characterized in that** C₅S₂$ is stabilized by adding one or more foreign ions from the group of the halogens, nonmetals, alkali and alkaline earth metals as well as substances from the transition metals and metalloids and metals to the crystal structure.

4. A method according to at least one of claims 1 to 3, **characterized in that** materials, which supply mineralizers, preferably phosphate, fluoride, alkali, nitrate and/or chloride, are added to the raw meal.

5. A method according to at least one of claims 1 to 14, **characterized in that** a heating rate in the range of 10 to 6000°C/minute is set.

6. A method according to at least one of claims 3 to 5, **characterized in that** the temperature during sintering ranges between 1100 and 1300°C.

7. A method according to at least one of claims 1 to 5, **characterized in that** the temperature during sintering ranges from 900 to 1200°C, preferably from 1050 to 1150°C.

8. A method according to any one of claims 1 to 7, **characterized in that**, in addition to C₅S₂$ and C₄(AₓF₍₁₋ₓ₎)₃$, the clinker contains 0 to 30% by weight C₂(A_{y}F_{(1-y)}), with y ranging from 0.2 to 0.8, 0 to 20% by weight reactive aluminates, 0 to 25% by weight periclase (M), and 0 to 30% by weight secondary phases, relative to the total amount of clinker, with the contents of the phases amounting to 100%.

9. The method according to claim 8, **characterized in that** at least one X-ray amorphous phase / a glassy phase is present as a secondary phase in the range of 1 to 10% by weight, preferably 2 to 8% by weight, and still more preferably 3 to 5% by weight.

10. A method according to at least one of claims 1 to 9, **characterized in that** the ternesite clinker is ground to a degree of fineness (according to Blaine) ranging from 2000 cm²/g to 6000 cm²/g, and preferably ranging from 3000 cm²/g to 5000 cm²/g.

11. A method according to at least one of claims 1 to 9, **characterized in that** the ternesite clinker is ground to a degree of fineness (according to Blaine) ranging from 5000 to 10000 cm²/g, and preferably ranging from 7000 cm²/g to 9000 cm²/g.

12. A method according to at least one of claims 1 to 9, **characterized in that** the ternesite clinker is ground to a degree of fineness (according to Blaine) of more than 10000 cm²/g, and 3 to 99%, and preferably 5 to 50%, of the phase content of the clinker is present as an X-ray amorphous phase.

## Revendications

1. Procédé pour la production d'un clinker à la ternésite, **caractérisé en ce qu'**on soumet à un frittage un mélange de farine crue qui contient au moins des sources pour du CaO, du SiO₂ et du SO₃, la température étant réglée lors du frittage dans la plage de 900 à 1300 °C, de telle sorte que le clinker à la ternésite présente une teneur en C₅S₂$ dans la plage de 20 à 95 % en poids et une teneur en C₄(AₓF₍₁₋ₓ₎)₃$, où x s'élève de 0,1 à 1, de 0 à inférieure à 15 % en poids, chaque fois rapportés au poids total du clinker.

2. Procédé selon la revendication 1, **caractérisé en ce que** le mélange de farine crue contient en outre des sources pour du Al₂O₃ et pour du Fe₂O₃.

3. Procédé selon la revendication 1 ou 2, **caractérisé en ce qu'**on stabilise le C₅S₂$ par incorporation dans la structure du cristal d'un ou de plusieurs ions étrangers choisis parmi le groupe comprenant des halogènes, des non-métaux, des métaux alcalins et alcalino-terreux, ainsi que des représentants des métaux de transition et des métalloïdes, et des métaux.

4. Procédé selon au moins une des revendications 1 à 3, **caractérisé en ce qu'**on ajoute à la farine crue, des matières qui procurent des minéralisateurs, de préférence du phosphate, du fluorure, des alcalis, du nitrate et/ou du chlorure.

5. Procédé selon au moins une des revendications 1 à 4, **caractérisé en ce qu'**on règle une vitesse de chauffage dans la plage de 10 à 6000 °C/minute.

6. Procédé selon au moins une des revendications 3 à 5, **caractérisé en ce que** la température lors du frittage se situe dans la plage de 1100 à 1300 °C.

7. Procédé selon au moins une des revendications 1 à 5, **caractérisé en ce que** la température lors du frittage se situe dans une plage de 900 à 1200 °C, de préférence à une valeur de 1050 à 1150 °C.

8. Procédé selon au moins une des revendications 1 à 7, **caractérisé en ce que** le clinker contient en plus du C₅S₂$ et du C₄(AₓF₍₁₋ₓ₎)₃$, de 0 à 30 % en poids de C₂(A_{y}F_{(1-y)}) où y se situe dans la plage de 0,2 à 0,8, de 0 à 20 % en poids d'aluminates réactifs, de 0' à 25 % en poids de périclase (M) et de 0 à 30 % en poids de phases secondaires, rapportés à la quantité totale du clinker, les fractions des phases s'additionnant pour donner 100 %.

9. Procédé selon la revendication 8, **caractérisé en ce qu'**est présente au moins une phase amorphe d'après l'analyse aux rayons X/une phase vitreuse, à titre de phase secondaire, dans la plage de 1 à 10 % en poids, de préférence de 2 à 8 % en poids et de manière encore plus préférée de 3 à 5 % en poids.

10. Procédé selon au moins une des revendications 1 à 9, **caractérisé en ce qu'**on broie le clinker à la ternésite jusqu'à obtenir une finesse (selon Blaine) de 2000 cm²/g à 6000 cm²/g, de préférence de 3000 cm²/g à 5000 cm²/g.

11. Procédé selon au moins une des revendications 1 à 9, **caractérisé en ce que** le clinker à la ternésite est broyé jusqu'à obtenir une finesse (selon Blaine) de 5000 à 10000 cm²/g, de préférence de 7000 cm²/g à 9000 cm²/g.

12. Procédé selon au moins une des revendications 1 à 9, **caractérisé en ce que** le clinker à la ternésite est broyé jusqu'à obtenir une finesse (selon Blaine) supérieure à 10000 cm²/g, et de 3 à 99 %, de préférence de 5 à 50 % de la composition phasique du clinker sont présents sous une forme amorphe d'après l'analyse aux rayons X.
